# FASCICULE DE BREVET EUROPEEN

(11) **EP 1 781 579 B1**
(45) Date de publication et mention de la délivrance du brevet: **24.06.2009**
(21) Numéro de dépôt: 05791935.9
(22) Date de dépôt: 19.07.2005
(51) Int. Cl.: C04B 7/32, C04B 28/06

(54) **CLINKER SULFOALUMINEUX A HAUTE TENEUR EN BELITE, PROCEDE DE FABRICATION D'UN TEL CLINKER ET SON UTILISATION POUR LA PREPARATION DE LIANTS HYDRAULIQUES**
SULFOALUMINATKLINKER MIT HOHEM BELITANTEIL, VERFAHREN ZU DESSEN HERSTELLUNG SOWIE VERWENDUNG FÜR DIE HERSTELLUNG VON HYDRAULISCHEN BINDEMITTELN
HIGH BELITE-CONTAINING SULFOALUMINOUS CLINKER, METHOD FOR THE PRODUCTION AND THE USE THEREOF FOR PREPARING HYDRAULIC BINDERS.

(30) Priorité: 20.07.2004 FR 0451586
(43) Date de publication de la demande: 09.05.2007
(73) Titulaire: LAFARGE, 75116 Paris (FR)
(72) Inventeur: GARTNER, Ellis, F-69003 LYON (FR); LI, Guanshu, F-69003 LYON (FR)
(74) Mandataire: Mérigeault, Shona
(86) Numéro de dépôt international: PCT/FR2005/050595
(87) Numéro de publication internationale: WO 2006/018569

(56) Documents cités:
- US-A- 4 286 992
- MAILING J ET AL: "Generalized Bogue computations to forecast the mineralogical composition of sulfoaluminate cements based on fly ashes" ADV CEM RES; ADVANCES IN CEMENT RESEARCH JAN 1999 THOMAS TELFORD SERVICES LTD, LONDON, ENGL, vol. 11, no. 1, janvier 1999 (1999-01), pages 27-34, XP008044126
- GLASSER F P ET AL: "High-performance cement matrices based on calcium sulfoaluminate-belite compositions" CEM CONCR RES; CEMENT AND CONCRETE RESEARCH DECEMBER 2001, vol. 31, no. 12, décembre 2001 (2001-12), pages 1881-1886, XP002320779
- P.K.MEHTA: "Investigations on energy-saving cements" WORLD CEMENT TECHNOLOGY, mai 1980 (1980-05), pages 166-177, XP008044077 cité dans la demande
- DATABASE EPODOC EUROPEAN PATENT OFFICE, THE HAGUE, NL; XP002320783 & KR 9 708 685 B1 (SSANG YONG CEMENT IND. CO.,LTD) 28 mai 1997 (1997-05-28)
- BERETKA J ET AL: "Influence of C4A3S~ content and W/S ratio on the performance of calcium sulfoaluminate-based cements" CEM CONCR RES; CEMENT AND CONCRETE RESEARCH NOV 1996 PERGAMON PRESS INC, TARRYTOWN, NY, USA, vol. 26, no. 11, novembre 1996 (1996-11), pages 1673-1681, XP002320780
- DATABASE WPI Section Ch, Week 198947 Derwent Publications Ltd., London, GB; Class C04, AN 1989-346335 XP002320784 & SU 1 456 385 A (LVOV POLY) 7 février 1989 (1989-02-07)
- ARJUNAN P ET AL: "Sulfoaluminate-belite cement from low-calcium fly ash and sulfur-rich and other industrial by-products" CEM CONCR RES; CEMENT AND CONCRETE RESEARCH 1999 ELSEVIER SCIENCE LTD, EXETER, ENGL, vol. 29, no. 8, 5 juillet 1998 (1998-07-05), pages 1305-1311, XP002320781
- BERETKA J ET AL: "UTILISATION OF INDUSTRIAL WASTES AND BY-PRODUCTS FOR THE SYNTHESIS OF SPECIAL CEMENTS" RESOURCES CONSERVATION AND RECYCLING, ELSEVIER SCIENCE PUBLISHER, AMSTERDAM, NL, vol. 9, no. 3, 1 octobre 1993 (1993-10-01), pages 179-190, XP000445745 ISSN: 0921-3449
- HEWLETT P C (ED): "LEA'S CHEMISTRY OF CEMENT AND CONCRETE, PASSAGE" 1998, LEA'S CHEMISTRY OF CEMENT AND CONCRETE, OXFORD : BUTTERWORTH-HEINEMANN, GB, PAGE(S) 437-439,442-446 , XP002320782 ISBN: 0-340-56589-6 page 438, alinéa 3 page 442, alinéa 9.5.2
- DATABASE WPI Section Ch, Week 198422 Derwent Publications Ltd., London, GB; Class L02, AN 1984-138981 XP002320785 & SU 1 039 913 A (NAT GAS RES INST) 7 septembre 1983 (1983-09-07)

## Description

La présente invention se rapporte à un clinker sulfoalumineux à haute teneur en bélite, à son procédé de fabrication, et à son utilisation pour la préparation de liants hydrauliques.

La plupart des bétons modernes sont faits avec des ciments hydrauliques obtenus en général à partir de clinkers de ciment Portland.

La fabrication du ciment Portland est réalisée en chauffant un mélange fin et intime de calcaire, argile, silice et minerai de fer, à une température supérieure à 1400°C dans un four rotatif. Le mélange calciné, le clinker, se présente sous forme de nodules durs qui, après refroidissement, sont broyés avec des sulfates de calcium et d'autres additions minérales pour former le ciment Portland.

Une teneur très élevée en calcaire est nécessaire dans le mélange des matières premières introduites dans le four afin d'obtenir un clinker ayant pour phase minérale principale, l'alite. L'alite est une forme impure de trisilicate de calcium, Ca₃Si0₅, que l'on écrit sous la forme conventionnelle C3S.

Une haute teneur en alite, généralement supérieure à 50%, est indispensable dans la composition minéralogique des ciments modernes, car c'est elle qui permet un développement rapide de la résistance mécanique juste après la prise, et d'acquérir une résistance mécanique suffisante à 28 jours et au-delà, afin de satisfaire aux exigences, en ce domaine, de la plupart des normes ciment.

Pour la suite de l'exposé de l'invention, les notations abrégées suivantes seront utilisées, sauf indication contraire explicite, pour désigner les composants minéralogiques du ciment.
- C représente CaO,
- A représente Al₂O₃,
- F représente Fe₂O₃,
- S représente SiO₂,
- $ représente SO₃.

Durant ces dernières décades, la teneur en dioxyde de carbone, CO₂, dans l'atmosphère s'est accrue considérablement et continue de s'accroître de plus en plus rapidement. Ceci est lié à l'activité humaine, et les scientifiques sont unanimes pour reconnaître que cet accroissement aura des effets importants sur les conditions climatiques futures.

Beaucoup de gouvernements prennent aujourd'hui des mesures dans le but de renverser cette tendance et s'intéressent à la réduction des émissions du CO₂, en particulier celui rejeté par les industries, l'industrie du ciment ayant une forte contribution dans ce domaine en étant responsable de 5% des émissions industrielles de CO₂.

Les émissions de CO₂ lors de la fabrication du clinker de ciment Portland peuvent être réduits d'environ 10% si l'on élimine presque totalement l'alite. Ceci peut être fait si l'on réduit de 10% la quantité de calcaire introduite dans le four; la quantité de CO₂ liée à la décarbonatation du calcaire lors de la calcination est réduite, ainsi que la quantité de combustible nécessaire pour fournir l'énergie pour décarbonater le calcaire.

Ceci s'accompagne d'une réduction de la température du four qui présente des avantages, comme décrit par E.Gartner, Cement and Concrete Research, « Industrially interesting approaches to low CO₂ cements », 2004, article in press CEMCON-02838.

Les clinkers de ciment Portland à faible teneur en alite sont alors à forte teneur en bélite, une forme impure de silicate dicalcique Ca₂SiO₄, que l'on écrit sous la forme conventionnelle C2S. Mais les ciments Portland obtenus, riches en bélite, ne permettent pas d'obtenir à court terme des résistances mécaniques suffisantes pour satisfaire aux exigences normatives, et aux performances requises dans les applications des bétons modernes actuels.

Pour ces raisons la production de clinkers de ciment Portland riches en bélite ne constitue pas une solution satisfaisante pour la réduction de 10%, voire moins, des émissions industrielles de CO₂.

Dans le but de développer des ciments commercialement utilisables dont la fabrication est associée avec de faibles émissions industrielles de CO₂, il est nécessaire d'examiner les autres types de clinkers de ciments hydrauliques ; parmi ceux-ci, les systèmes basés sur les aluminates de calcium et/ou sulfates de calcium.

Les ciments à haute teneur en alumine, comme le « Ciment Fondu » de LAFARGE, sont connus pour leur propriété d'acquisition de résistance élevée à court terme ; mais ils posent parfois le problème bien connu de « conversion », qui s'accompagne d'une chute de la résistance mécanique, et de plus leur fabrication nécessite des équipements hautement spécialisés, une forte consommation de combustible, malgré la faible teneur en calcaire des matières premières, et des matières premières, telle la bauxite, ayant des coûts relativement élevés.

D'autre part, les ciments à base de sulfates, tels les plâtres, les anhydrites, sont bon marchés et génèrent peu de CO₂ lors de leur fabrication, mais ne sont pas utilisables dans la plupart des applications bétons, à cause de leurs faibles propriétés mécaniques et leur mauvaise résistance à l'eau.

Cependant, certains types de ciments basés sur des sulfoaluminates de calcium, écrits sous la forme CSA, présentent un grand intérêt car ils cumulent les effets positifs des aluminates de calcium et des sulfates de calcium en termes de faible émission industrielle de CO₂ sans faire appel à des matières premières à coûts élevés, dans la mesure où on pourra minimiser l'utilisation de bauxites de haute qualité ou les substituer.

Durant ces 30 dernières années, l'industrie du ciment en Chine a développé une technologie et mis au point une série de normes nationales ayant trait à des ciments sulfoalumineux connus sous le nom de « TCS series », décrits par Zang L., Su M.Z., et WONG Y.M., dans la revue "Advances in Cement Research ", Volume 11, n°1, 1999.

Cependant, ces ciments n'ont pas été développés dans le but de réduire les émissions industrielles de CO₂ ; ils l'ont été surtout pour des applications où il fallait obtenir des résistances élevées à court terme, comme pour la préfabrication.

Ces ciments sulfoaluminates « TCS series » sont très riches en phase sulfoaluminate de calcium C4A3$, connue sous le nom de « sel de Klein » ou « yee' limite », qui permet obtenir des résistances élevées à court terme, mais nécessite pour être formée en cours de production, d'introduire dans le four, comme matière première, des quantités élevées de bauxite de haute qualité. Le coût de ces ciments est prohibitif pour qu'ils soient utilisés dans beaucoup d'applications. Néanmoins, ils peuvent être fabriqués avec des fours rotatifs conventionnels.

Les compositions typiques des ciments alumineux CSA sont données dans le tableau 1.

**Tableau 1**

| Phases | C4A3$ (%) | C2S (%) | C4AF (%) |
|---|---|---|---|
| CSA (faible teneur en ferrite) | 55 à 75 | 15 à 30 | 3 à 6 |
| CSA (haute teneur en-ferrite) | 35 à 55 | 15 à 35 | 15 à 30 |

| | | | |
|---|---|---|---|
| CSA : Ciment Sulfoalumineux | | | |

A la même période, P.K. Mehta développe aux USA d'autres clinkers dont la composition est basée sur la phase sulfoaluminate de calcium C4A3$ « yee' limite », et décrits dans la revue " World Cement Technology de mai 1980, pp 166-177, et la revue "World Cement Technology de juillet/aout 1978, pp144-160.

Les clinkers décrits par Mehta diffèrent des « TCS series »principalement par leur très haute teneur en sulfate de calcium libre, sous forme d'anhydrite.

Bien que les clinkers décrits par Mehta n'aient jamais été commercialisés, la référence citée clinker # 5 semble correspondre aux exigences de faible émission industrielle de CO₂ et avoir des performances qui sont à peu près celles des ciments Portland modernes.

Ce clinker contient 20% de C4A3$ « yee' limite », 20% d'anhydrite C$, 45% de bélite C2S et 15% d'aluminoferrite tétracalcique C4AF.

Cependant, malgré les bonnes performances obtenues en laboratoire, ce clinker, ainsi que les autres cités par Metha dans ses publications, présentent l'inconvénient lié à leur très forte teneur en sulfate de calcium ; il est en effet bien connu que le sulfate de calcium est instable à haute température ou il se dissocie en générant un gaz, le dioxyde de soufre SO₂ particulièrement en atmosphère réductrice ou lorsque la pression en oxygène est faible, ce qui est le cas dans les fours rotatifs. Ainsi, les clinkers proposés par Metha seraient difficiles à fabriquer dans des fours rotatifs conventionnels sans créer de sérieux problèmes environnementaux liés à l'émission du dioxyde de soufre SO₂.

Le clinker # 5 cité par Metha dans la revue " World Cement Technology de mai 1980, pp 166-177 a la composition minéralogique suivante, en poids par rapport au poids total de clinker :
C2S :45% C4A3$ : 20% C4AF : 15% C$ : 20%
avec C$ : sulfate de calcium (anhydrite).

Il serait néanmoins souhaitable de disposer de clinkers conduisant à des émissions industrielles réduites de CO₂ lors de leur fabrication, requérant également une consommation réduite d'énergie permettant de valoriser des sous-produits industriels qui ne sont pas couramment utilisés comme matières premières entrant dans leur composition, et qui en même temps permettraient l'obtention de liants hydrauliques ayant des propriétés rhéologiques et mécaniques au moins égales à celles des ciments Portland conventionnels, notamment en ce qui concerne la performance mécanique aux jeunes âges et le développement des résistances à moyen et long terme.

Les buts ci-dessus sont atteints selon l'invention par un clinker bélite-sulfoalumineux ayant, en poids par rapport au poids total du clinker, la composition minéralogique suivante :
- 5 à 25%, préférentiellement 10 à 20%, de phase aluminoferrite calcique d'une composition correspondant à la formule générale C2AXF(1-X), avec X compris entre 0,2 et 0,8.
- 15 à 35%, préférentiellement 20 à 30%, de phase sulfoaluminate de calcium « yee' limite » (C4A3$),
- 40 à 75%, préférentiellement 45 à 65% bélite (C2S),
- de 0,01 à 10% d'une ou plusieurs phases mineures choisies parmi les sulfates de calcium, les sulfates alcalins, la perovskite, les aluminates de calcium, la géhlénite, la chaux libre et la périclase, et/ou une phase vitreuse telle un laitier de haut fourneau ou un verre hydraulique.

Selon l'invention le clinker contient en outre un ou plusieurs éléments secondaires choisis parmi le soufre, le magnésium, le sodium, le potassium, le bore, le phosphore, le zinc, le manganèse; le titane, le fluore, le chlore, présents dans les quantités suivantes :
- de 3 à 10% de soufre exprimé en anhydride sulfurique,
- jusqu' à 5% de magnésium exprimé en oxyde de magnésium,
- jusqu' à 5% de sodium exprimé en oxyde de sodium,
- jusqu' à 5% de potassium exprimé en oxyde de potassium
- jusqu' à 3% de bore exprimé en oxyde de bore,
- jusqu'à 7% de phosphore exprimé en anhydride phosphorique,
- jusqu'à 5% de zinc, manganèse, titane ou leur mélange, exprimé en oxydes de ces éléments,
- jusqu'à 3% de fluorure, de chlorure, ou leur mélange, exprimé en fluorure de calcium et chlorure de calcium, la quantité d'éléments secondaires, exprimée comme indiquée ci-dessus, étant inférieure ou égale à 15% en poids par rapport au poids total du clinker.

De manière préférentielle, le clinker selon l'invention comprendra comme éléments secondaires dans la composition chimique :
- de 4 à 8% de soufre exprimé en anhydride sulfurique,
- de 1 à 4 % de magnésium, exprimé en oxyde de magnésium,
- de à 0,1 à 2% de sodium, exprimé en oxyde de sodium
- de 0,1 à 2% de potassium, exprimé en oxyde de potassium
- jusqu'à 2% de bore, exprimé en oxyde de bore,
- jusqu'à 4% de phosphore exprimé en anhydride phosphorique,
- jusqu'à 3% de zinc, manganèse, titane ou leur mélange, exprimé en oxydes de ces éléments,
- jusqu'à 1% de fluorure, de chlorure, ou leur mélange, exprimé en fluorure de calcium et chlorure de calcium.

De manière encore plus préférentielle, le clinker selon l'invention comprendra comme éléments secondaires dans la composition chimique :
- de 0,2 à 1 % de sodium, exprimé en oxyde de sodium,
- de 0,2 à 1 % de potassium, exprimé en oxyde de potassium,
- de 0,2 à 2% de bore, exprimé en oxyde de bore,
- une teneur en fluorure plus chlorure inférieure ou égale à 1%, exprimée en fluorure et chlorure de calcium.

De préférence dans le clinker préférentiel ci-dessus le sodium et le potassium sont présents à la fois.

L'élément préféré selon l'invention est le bore qui, introduit dans le cru sous forme de borax, favorise la formation de phase bélite α' lors de la clinkérisation.

Ainsi, de manière avantageuse la phase bélite du clinker est partiellement ou totalement cristallisée sous la forme α'.

De préférence, au moins 50%, en poids de la phase bélite du clinker, est sous la forme α'.

Le clinker comprend au moins les oxydes principaux suivants présents dans les proportions relatives exprimées en % du poids total de clinker :

| | |
|---|---|
| CaO : | 50 à 61 % |
| Al₂O₃ : | 9 à 22 % |
| SiO₂: | 15 à 25 % |
| Fe₂O₃ : | 3 à 11 % |

En comparant avec la phase alite (C3S), la principale composante des ciments Portland, une quantité plus élevée de phase bélite (C2S) dans le clinker est tout à fait bénéfique. Elle conduit à la réduction des émissions industrielles de CO₂ et de la consommation énergétique. D'autre part la bélite contribue au développement de la résistance à long terme du ciment bélite-sulfoalumineux

Le ciment peut être obtenu par co-broyage du clinker avec une quantité adéquate de gypse ou d'autres formes de sulfate de calcium déterminée par essais ou calcul théorique. Dans le cas de l'introduction d'un excès de sulfate de calcium dans le cru permettant d'obtenir de l'anhydrite dans le clinker, le ciment peut être directement préparé par broyage du clinker sans gypsage supplémentaire.

Ces ciments bélite-sulfoalumineux peuvent être utilisés avec un ou plusieurs agents dispersants choisis parmi les polynaphtalènes sulfonates, les polymélamines sulfonates, les acides hydroxycarboxyliques, les acides (poly)acryliques, leurs dérivés et leurs sels correspondants, les dérivés de l'acide phosphonique, ainsi que leurs mélanges.

Ces adjuvants sont des produits disponibles dans le commerce. A titre d'exemple, on peut citer les produits OPTIMA 100® et OPTIMA 175®, commercialisés par la société CHRYSO®.

Le clinker sulfoalumineux selon l'invention peut avantageusement comprendre un accélérateur ou un retardateur de prise et/ou de durcissement.

Un autre objet de l'invention est de proposer un procédé de fabrication d'un clinker sulfoalumineux comprenant :
a) la préparation d'un cru comprenant une matière première ou un mélange de matières premières capable par clinkérisation de fournir les phases C2AXF(1-X), avec X compris entre 0,2 et 0,8, C4A3$ et C2S dans les proportions requises ;
b) l'ajout et le mélange au cru d'au moins un additif d'apport d'élément secondaire choisi parmi le soufre, le magnésium, le sodium, le potassium, le bore, le phosphore, le zinc, le manganèse, le titane, le fluor, le chlore, ou leurs mélanges, en une quantité calculée pour que, après clinkérisation, la quantité correspondante d'éléments secondaires, exprimée comme indiquée ci-dessus, soit inférieure ou égale à 15% en poids par rapport au poids total du clinker ; et
c) la calcination du mélange à une température de 1150°C à 1350°C, de préférence de 1220°C et 1320°C, pendant au minimum 15 minutes en atmosphère suffisamment oxydante pour éviter la réduction du sulfate de calcium en dioxyde de soufre.

Ainsi, l'émission de CO₂ est diminuée de plus de 25% par rapport à celle résultant de la clinkérisation d'un ciment de Portland conventionnel.

Les matières premières employées dans la fabrication du clinker selon l'invention sont choisies parmi les calcaires phosphatiques, les calcaires magnésiens, les argiles, les cendres volantes, les cendres de foyer, les cendres de lits fluidisés, les latérites, les bauxites, les boues rouges, les laitiers, les mâchefers, les gypses, les désulfogypses, les phosphogypses, les boues de désulfurisation, les scories industrielles, ainsi que leurs mélanges.

Les additifs d'apport d'éléments secondaires peuvent être les matières premières elles-mêmes dans la mesure où elles contiennent les éléments secondaires requis en proportions appropriées ou des composés particuliers de ces éléments secondaires, par exemple des oxydes comme les oxydes de sodium, potassium, magnésium, bore (notamment le borax), zinc, manganèse, titane, des halogénures comme le fluorure et le chlorure de calcium et des sulfates notamment le sulfate de calcium.

Au sens de la présente invention on entend par additif d'apport d'éléments secondaires, des composés permettant d'améliorer l'aptitude à la clinkérisation du mélange de matières premières, de stabiliser une forme cristalline désirée des phases afin d'améliorer la réactivité.

La fabrication du liant, en particulier du clinker selon l'invention, consiste à broyer le clinker avec du gypse jusqu'à la finesse requise pour activer ses propriétés hydrauliques. Plus le clinker présente une surface spécifique élevée, meilleure est sa réactivité du point de vue hydraulique.

De préférence, le clinker est broyé jusqu'à obtention d'une surface spécifique Blaine supérieure à 3000 cm²/g, avantageusement supérieure à 3500 cm²/g.

Le liant peut comprendre des matériaux sources de sulfate de calcium et/ou d'oxyde de calcium.

De façon avantageuse, le liant selon l'invention comprend jusqu'à 15% en poids du poids total de liant, d'un matériau choisi parmi le gypse, les anhydrites et les hémihydrates.

Selon un autre mode de réalisation avantageux, le liant de l'invention peut également comporter jusqu'à 30% en poids du poids total de liant, d'au moins un matériau choisi parmi les calcaires, les pouzzolanes, les cendres volantes et les laitiers de hauts fourneaux.

Le liant selon l'invention peut également comprendre au moins un retardateur de prise. De tels retardateurs de prise peuvent être choisis parmi les gluconates, les saccharides, les retardateurs de type acide phosphorique ou acide carboxylique ou leurs mélanges.

Préférentiellement, le liant selon l'invention comprend au moins un agent dispersant choisi parmi les polynaphtalènes sulfonates, les polymélanines sulfonates, les acides hdroxycarboxyliques, les acides (poly)acryliques et leurs sels correspondants, les dérivés de l'acide phosphonique ainsi que leurs mélanges.

L'invention vise également la fabrication d'un coulis, d'un béton ou d'un mortier utilisant le liant selon l'invention.

L'invention est illustrée par les exemples suivants.

Dans les exemples, et sauf indications contraires, toutes les parties et pourcentages sont exprimés en poids.

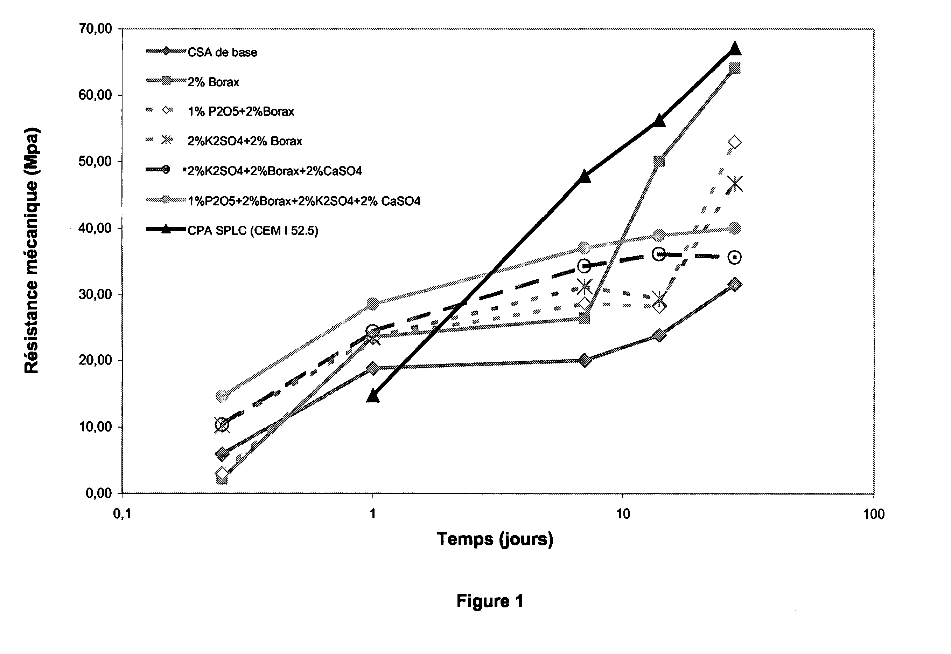

La figure 1 présente l'évolution dans le temps des résistances mécaniques de différents mortiers préparés selon l'invention comparées à celle d'un mortier de référence.

### EXEMPLE 1 : Préparation d'un cru de clinker sulfoalumineux

Pour la fabrication du clinker sulfoalumineux selon l'invention, on utilise des matières premières choisies parmi le calcaire d'Orgon vendu par la société MEAC, l'argile riche en alumine de marque BS4® et/ou l'argile moins riche en alumine de marque BS5® vendues par la société AGS-BMP, et du gypse naturel de Villiers concassé. De faibles quantités d'oxyde de fer ou de minerai de fer, indiquées dans le tableau 3, sont également employées pour ajuster la teneur en phase ferrite du clinker.

Les compositions chimiques des matières premières employées sont données dans le tableau 2.

**Tableau 2**

| % | CaO | SiO₂ | Al₂O₃ | Fe₂O₃ | SO₃ | MgO | TiO₂ | K₂O | Na₂O | Perte au feu |
|---|---|---|---|---|---|---|---|---|---|---|
| Fines d'Orgon | 55,71 | 0,01 | 0,08 | 0,03 | 0,05 | 0,19 | 0,01 | 0,01 | 0,01 | 43,67 |
| Argile BS4 | 0,14 | 41,88 | 40,26 | 0,66 | 0,34 | 0,08 | 0,87 | 0,16 | 0,12 | 16,03 |
| Argile BS5 | 0,38 | 51,04 | 32,78 | 1,30 | 0,20 | 0,18 | 1,33 | 1,02 | 0,08 | 11,92 |
| Gypse | 32,68 | 1,05 | 0,15 | 0,08 | 44,64 | 0,11 | 0,02 | 0,02 | 0,02 | 21,43 |

Les matières premières sont séchées à 100°C pendant 4 heures (à l'exception du gypse) puis broyées de façon à pouvoir passer un tamis d'ouverture de maille 80µm.

Le gypse concassé et broyé ainsi que l'argile BS4 ont été préalablement tamisés au tamis de 100 µm avant incorporation dans le mélange de matières premières.

Toutefois, les particules ayant une taille supérieure à 80 µm représentent moins de 5% du mélange de matières premières.

Les crus de base sont ainsi obtenus en mélangeant ensemble le calcaire, l'argile, le gypse, et l'oxyde de fer, par exemple avec l'argile BS4 suivant les proportions indiquées dans le Tableau 3.

**Tableau 3**

| % en masse | Calcaire d'Orgon | Argile "BS4" | Gypse de Villiers | Fe₂O₃ |
|---|---|---|---|---|
| Clinker sans anhydrite | 60,1 | 28,34 | 6,58 | 5,07 |

A partir de ces crus de base, on réalise différents crus en leur ajoutant un additif ou un mélange d'additifs choisi parmi le borax, l'oxyde de zinc, l'oxyde de magnésium, et le gypse (SO₃). Les proportions d'additifs sont indiquées dans le tableau 4.

**Tableau 4**

| Cru obtenu | Additif | | Cru de base. % en poids |
|---|---|---|---|
| | Nature | % en poids | |
| Cru de base | - | - | 100 |
| Cru + borax | Borax | 4,03 | 95,97 |
| Cru + ZnO | ZnO | 2,17 | 97,83 |
| Cru + MgO | MgO | 2,40 | 97,60 |
| Cru + SO₄ | Gypse | 6,98 | 93,02 |

Les crus obtenus sont mélangés et homogénéisés par dilutions successives.

Les crus sont alors conditionnés sous forme de nodules en utilisant un granulateur rotatif jusqu'à obtention de nodules d'une taille de 5 à 10 mm de diamètre.

Les nodules ainsi obtenus sont placés dans un four à 100°C durant 12 heures.

### EXEMPLE 2 : Fabrication d'un clinker sulfoalumineux

250g des crus du tableau 4 sont placés dans des creusets de 7 cm de diamètre et d'une hauteur de 10 cm.

Les creusets sont d'abord amenés à une température de précalcination comprise entre 950 et 975°C, selon une progression thermique d'environ 15°C/mn. Le cru est précalciné pendant 30 minutes.

Puis les creusets sont rapidement transférés dans un four à haute température qui a été préalablement préchauffé à une température comprise entre 950 et 975°C.

Les creusets ainsi transférés sont équilibrés thermiquement pour être entre 950 et 975°C, puis la température est augmentée à raison de 5°C/mn, jusqu'à une température comprise entre 1150 et 1350°C pendant une durée comprise entre 30 et 60 minutes.

Après le temps de cuisson, les clinkers ainsi obtenus sont refroidis à l'air libre jusqu'à la température ambiante.

La réduction d'émission de CO₂ lors de la fabrication des clinkers est de plus de 25% par rapport à des ciments de Portland ordinaires, comme le montre le tableau 5.

**Tableau 5**

| | Quantité nécessaire de calcaire de (Kg/t clinker) | Emission de CO₂ provenant des matières premières (kg/t clinker) | % de réduction de CO₂ |
|---|---|---|---|
| Clinker sulfoalumineux selon l'invention | 880 | 387 | 26% |
| Clinker de ciment Portland classique | 1200 | 528 | - |

Par ailleurs, la faible température de clinkérisation et l'utilisation de grandes proportions de gypse dans ces clinkers sulfoalumineux, contribuent également à la réduction d'émission de CO₂ ainsi qu'à une réduction de la quantité d'énergie nécessaire pour la clinkérisation de plus de 20%.

### EXEMPLE 3 : Préparation des ciments sulfoalumineux

Les ciments correspondant aux différents clinkers sont obtenus par cobroyage, en utilisant un broyeur de laboratoire d'une capacité de 1 kg, avec 8% de gypse comme régulateur de prise, à l'exception du clinker correspondant au cru +SO₄ du tableau 4 qui contient déjà la quantité de gypse nécessaire.

### EXEMPLE 4 : évaluation de la consistance, des temps de prise et des résistances mécaniques sur mortier.

On réalise avec les différents ciments obtenus à partir des clinkers de l'exemple 2, des mortiers dont la composition est la suivante :
500g de ciment
500 g de sable silico-calcaire de granulométrie 0/0,315 mm
250 g d'eau

Après introduction successive des trois composants dans un mixer Kenwood, l'ensemble est malaxé pendant 30 secondes à petite vitesse, puis 30 secondes à grande.

Ces deux vitesses correspondent à celles du malaxeur normalisé utilisé pour les essais mortiers selon la norme EN 196-1.

Les mortiers obtenus sont évalués quant à leurs consistances et pour les temps de prise à 20°C.

Les essais de prise sont réalisés avec l'appareil Vicat, selon la norme EN 196-3.

La consistance est évaluée suivant la méthode du mini-slump décrite dans la publication Aïtcin P.C, Jolicoeur C, and MacGregor J.G., « Superplasticizers : How they work and why they occasionally don't », Concrete International, vol.16, n° 15, 1994, pp 32-45.

Leur résistance mécanique est mesurée sur les éprouvettes de mortier prismatiques 2x2x10 cm³ préparées à 20°C en utilisant des moules métalliques et démoulées à 6 heures ou 24 heures selon le cas. Les éprouvettes sont conservées ensuite dans l'eau à 20°C jusqu'à l'échéance de mesure.

La résistance des échantillons obtenus est testée selon la norme EN 196-1.

### EXEMPLE 5 : Essais comparatifs des échantillons de mortiers selon l'invention.

Un mortier comprenant un ciment Portland "Saint Pierre la Cour" (SPLC), CPA CEM I, 52 ,5 selon la norme EN 197-1, est fabriqué selon le procédé de l'exemple 4, pour son utilisation comme échantillon de comparaison pour les différents essais.

Les résultats de ces essais sont donnés dans le tableau 6 :

**Tableau 6**

| Ciments | Consistance | Temps de prise (h) | Résistance en compression à 6h (MPa) | Résistance en compression à 24h (MPa) | Résistance en compression à 28j (MPa) |
|---|---|---|---|---|---|
| CPA SPLC | ferme | ~5,0 | 0 | 20,2 | 62,7 |
| CSA de base | plastique | non mesurée | 14,5 | 15,0 | 27,0 |
| CSA Borax | fluide | ~4,0 | 3,2 | 20,0 | 53,5 |
| CSA SO₃ | plastique | ~3,5 | 3,8 | 18,0 | 34,0 |
| CSA ZnO | ferme | ~2,0 | 9,6 | 18,2 | 28,0 |

| | | | | | |
|---|---|---|---|---|---|
| CPA SPLC : Ciment Portland Saint Pierre La Cour CSA : Ciment sulfoalumineux CSA de base : Ciment sulfoalumineux sans additif | | | | | |

Les résultats obtenus mettent en évidence que la composition préférentielle CSA Borax, selon notre invention, a des performances comparables à celles du ciment Portland SPLC.

Ils mettent également en évidence l'apport de l'additif sur les temps de prise et l'acquisition des résistances mécaniques, en particulier pour la composition CSA Borax.

### EXEMPLE 6 : Essais comparatifs.

Un nouveau cru de clinker sulfoalumineux de base a été préparé de la même manière que dans l'exemple 1, en utilisant les mêmes matières premières. A partir de ce cru de base, on réalise cinq crus modifiés, de la même manière que dans l'exemple 1, en lui ajoutant un additif ou un mélange d'additifs finement broyés. Ces additifs sont des composés chimiquement purs.

Six clinkers sulfoalumineux ont été préparés à partir du cru de base et à partir des cinq crus modifiés en suivant le mode opératoire décrit dans l'exemple 2, et en utilisant une température maximale de clinkérisation de 1300 °C pendant 30 minutes.

Les compositions chimiques des six clinkers CSA ont été déterminées en combinant analyses élémentaires directes avec des méthodes de calcul. Les résultats sont présentés dans le Tableau 7 :

**Tableau 7 : Compositions estimées des clinkers exprimées en % massique d'oxydes**

| | Ciment utilisé | CaO | Al₂O₃ | SiO₂ | Fe₂O₃ | SO₃ | MgO | TiO₂ | K₂O | Na₂O | P₂O₅ | B₂O₃ |
|---|---|---|---|---|---|---|---|---|---|---|---|---|
| 1 | CSA de base | 52,5 | 16,9 | 17,6 | 7,8 | 4,5 | 0,2 | 0,4 | 0,1 | 0,1 | 0,0 | 0,0 |
| 2 | 2% Borax | 51,5 | 16,6 | 17,2 | 7,6 | 4,4 | 0,2 | 0,4 | 0,1 | 0,7 | 0,0 | 1,4 |
| 3 | 1%P₂0₅+2%Borax | 51,3 | 16,5 | 17,2 | 7,2 | 4,3 | 0,2 | 0,3 | 0,1 | 0,6 | 1,0 | 1,4 |
| 4 | 2%K₂SO₄+2%Borax | 50,8 | 16,3 | 16,8 | 7,4 | 5,1 | 0,2 | 0,3 | 1,1 | 0,6 | 0,0 | 1,4 |
| 5 | 2%K₂SO₄+2%Borax + 2%CaSO₄ | 50,9 | 16,0 | 16,5 | 7,3 | 5,8 | 0,2 | 0,3 | 1,1 | 0,6 | 0,0 | 1,4 |
| 6 | 1%P₂O₅+2%Borax + 2%K₂SO₄ +2%CaSO₄ | 50,1 | 15,8 | 16,5 | 6,9 | 6,1 | 0,2 | 0,3 | 1,1 | 0,6 | 1,0 | 1,3 |

| | | | | | | | | | | | | |
|---|---|---|---|---|---|---|---|---|---|---|---|---|
| Entrées 2 à 6 : CSA de base + additifs | | | | | | | | | | | | |

Les clinkers obtenus ont ensuite été broyés de façon à obtenir des ciments ayant une surface spécifique Blaine de 3800 ± 100 cm²/g, selon la méthode décrite dans l'exemple 3, excepté que la masse de gypse est de 12% par rapport au clinker dans chaque cas.

Six mortiers ont été préparés à partir de ces six ciments, et leurs propriétés ont été testées (consistance, temps de prise, résistance mécanique) de la même façon que dans l'exemple 4.

A titre de comparaison, un nouveau batch du même ciment Portland que celui employé dans l'exemple 5 (St. Pierre La Cour CEM I 52.5) a été utilisé pour le mortier de l'entrée 7.

Les résultats de ces tests de mortiers sont présentés dans le Tableau 8 et sur la figure 1.

**Tableau 8 : Propriétés mécaniques des mortiers préparés**

| | **Ciment utilisé** | **Fluidité à 15 minutes** | **Résistance mécanique (MPa)** | | | | |
|---|---|---|---|---|---|---|---|
| | | | **Temps en jours** | | | | |
| | | | 0,25 | 1 | 7 | 14 | 28 |
| 1 | CSA de base | normale | 6 | 19 | 20 | 24 | 32 |
| 2 | 2% Borax | normale | 2 | 24 | 26 | 50 | 64 |
| 3 | 1 % P₂O₅+2% Borax | élevée | 3 | 23 | 29 | 28 | 53 |
| 4 | 2%K₂SO₄+2% Borax | modérément élevée | 10 | 23 | 31 | 29 | 47 |
| 5 | 2%K₂SO₄+2%Borax+2%CaSO₄ | modérément élevée | 10 | 24 | 34 | 36 | 36 |
| 6 | 1%P₂O₅+2%Borax+2%K₂SO₄+2% CaSO₄ | normale | 15 | 29 | 37 | 39 | 40 |
| 7 | CPA SPLC (CEM I 52.5) | normale | 0 | 15 | 48 | 56 | 67 |

| | | | | | | | |
|---|---|---|---|---|---|---|---|
| Entrées 2 à 6 : CSA de base + additifs | | | | | | | |

Le Tableau 8 et la figure 1 montrent clairement que tous les ciments à base de CSA conduisent à une meilleure résistance mécanique aux temps courts que le ciment Portland témoin (N° 7). A 28 jours cependant, le ciment Portland témoin conduit à une résistance mécanique légèrement meilleure (67 MPa) que celle du meilleur ciment CSA modifié (64 MPa). Quoi qu'il en soit, tous les ciments CSA modifiés par des additifs conduisent à des résistances mécaniques appartenant à une gamme acceptable pour des ciments Portland selon les normes cimentaires Européennes (> 35 MPa).

Tous les mélanges réalisés, excepté celui préparé à partir d'un mélange d'alkalis, possèdent une fluidité initiale et un temps de prise acceptables.

## Revendications

1. Clinker sulfoalumineux **caractérisé en ce qu'**il comprend comme composition phasique, par rapport au poids total du clinker :
- 5 à 25%, préférentiellement 10 à 20%, de phase aluminoferrite calcique d'une composition correspondant à la formule générale C2AXF(1-X), avec X compris entre 0,2 et 0,8.
- 15 à 35%, préférentiellement 20 à 30%, de phase sulfoaluminate de calcium « yee' limite » (C4A3$),
- 40 à 75%, préférentiellement 45 à 65% bélite (C2S),
- de 0,01 à 10% d'une ou plusieurs phases mineures choisies parmi les sulfates de calcium, les sulfates alcalins, la perovskite, les aluminates de calcium, la géhlénite, la chaux libre et la périclase, et/ou une phase vitreuse,
- et **en ce qu'**il contient un ou plusieurs éléments secondaires choisis parmi le soufre, le magnésium, le sodium, le potassium, le bore, le phosphore, le zinc, le manganèse, le titane, le fluor, le chlore, présents dans les quantités suivantes :
- de 3 à 10% de soufre exprimé en anhydride sulfurique,
- jusqu'à 5% de magnésium exprimé en oxyde de magnésium,
- jusqu'à 5% de sodium exprimé en oxyde de sodium,
- jusqu'à 5% de potassium exprimé en oxyde de potassium,
- jusqu'à 3% de bore exprimé en oxyde de bore,
- jusqu'à 7% de phosphore exprimé en anhydride phosphorique,
- jusqu'à 5% de zinc, manganèse, titane ou leur mélange, exprimé en oxydes de ces éléments,
- jusqu'à 3% de fluorure, de chlorure, ou leur mélange, exprimé en fluorure de calcium et chlorure de calcium, la quantité d'éléments secondaires, exprimée comme indiquée ci-dessus, étant inférieure ou égale à 15% en poids par rapport au poids total du clinker.

2. Clinker sulfoalumineux selon la revendication 1, **caractérisé en ce qu'**il comprend un ou plusieurs éléments secondaires dans les quantités suivantes, en poids par rapport au poids total de clinker :
- de 4 à 8% de soufre exprimé en anhydride sulfurique,
- de 1 à 4 % de magnésium exprimé en oxyde de magnésium,
- de à 0,1 à 2% de sodium exprimé en oxyde de sodium,
- de 0,1 à 2% de potassium exprimé en oxyde de potassium,
- jusqu'à 2% de bore, exprimé en oxyde de bore,
- jusqu'à 4 % de phosphore exprimé en anhydride phosphorique,
- jusqu'à 3% de zinc, manganèse, titane ou leur mélange, exprimé en oxydes de ces éléments,
- jusqu'à 1 % de fluorure, de chlorure, ou leur mélange, exprimé en fluorure de calcium et chlorure de calcium.

3. Clinker sulfoalumineux selon les revendications 1 à 2, **caractérisé en ce qu'**il comprend les éléments secondaires suivants, dans les quantités suivantes, en poids par rapport au poids total de clinker :
- de 0,2 à 1 % de sodium, exprimé en oxyde de sodium,
- de 0,2 à 1 % de potassium, exprimé en oxyde de potassium,
- de 0,2 à 2% de bore, exprimé en oxyde de bore,
- une teneur en fluorure plus chlorure inférieure ou égale à 1%, exprimé en fluorure et chlorure de calcium.

4. Clinker sulfoalumineux selon l'une quelconque des revendications 1 à 3, **caractérisé en ce qu'**il comprend au moins les oxydes principaux suivants présents dans les proportions relatives exprimées en % du poids total de clinker :
| | |
|---|---|
| CaO : | 50 à 61 % |
| Al₂O₃ : | 9 à 22 % |
| SiO₂ : | 15 à 25 % |
| Fe₂O₃ : | 3 à 11 % |

5. Clinker sulfoalumineux selon l'une quelconque des revendications 1 à 4, **caractérisé en ce que** la phase bélite est partiellement ou totalement cristallisée sous la forme α'.

6. Clinker sulfoalumineux selon l'une quelconque des revendications 1 à 5, **caractérisé en ce que** la phase bélite sous la forme α' représente au moins 50% en poids du clinker.

7. Clinker sulfoalumineux selon l'une quelconque des revendications précédentes, **caractérisé en ce qu'**il comprend un accélérateur ou retardateur de prise et/ou de durcissement.

8. Procédé de fabrication d'un clinker selon l'une quelconque des revendications précédentes, **caractérisé en ce qu'**il comprend :
a) la préparation d'un cru comprenant au moins une matière première ou un mélange de matières premières capable par clinkérisation de fournir les phases C2AXF(1-X) avec x compris entre 0,2 et 0,8, C4A3$ et C2S dans les proportions requises ;
b) l'ajout et le mélange au cru d'au moins un additif d'apport d'élément secondaire choisi parmi le soufre, le magnésium, le sodium, le potassium, le bore, le phosphore, le zinc, le manganèse, le titane, le fluor, le chlore, ou leurs mélanges en une quantité calculée pour donner un clinker selon l'une quelconque des revendications 1 à 4 ;
c) la calcination du mélange à une température de 1150°C à 1350°C, de préférence de 1220°C à 1320°C, pendant au minimum 15 minutes en une atmosphère suffisamment oxydante pour éviter la réduction du sulfate de calcium en dioxyde de soufre.

9. Procédé de fabrication d'un clinker sulfoalumineux selon la revendication 8, **caractérisé en ce que** les matières premières employées pour sa fabrication sont choisies parmi les calcaires phosphatiques, les calcaires magnésiens, les argiles, les cendres volantes, les cendres de foyer, les cendres de lits fluidisés, les latérites, les bauxites, les boues rouges, les laitiers, les mâchefers, les gypses, les désulfogypses, les phosphogypses, les boues de désulfurisation, les scories industrielles, ainsi que leurs mélanges.

10. Procédé de fabrication d'un clinker selon la revendication 8 ou 9, **caractérisé en ce que** le clinker obtenu est ensuite broyé avec ou sans sulfate de calcium, sous forme gypse, ou hemihydrate, ou anhydrite, jusqu'à l'obtention d'une surface spécifique Blaine supérieure à 3000 cm²/g, avantageusement supérieure à 3500 cm²/g.

11. Liant hydraulique comprenant un mélange du clinker selon l'une quelconque des revendications 1 à 7 et des matériaux sources de sulfate de calcium et/ou d'oxyde de calcium.

12. Liant selon la revendication 11 **caractérisé en ce qu'**il comprend jusqu'à 30% en poids du poids total de liant, d'au moins un matériau choisi parmi le calcaire, les pouzzolanes, les cendres volantes et les laitiers de hauts fourneaux.

13. Liant selon les revendications 11 ou 12, **caractérisé en ce qu'**il comprend jusqu'à 15% en poids du poids total de liant, d'un matériau choisi parmi le gypse, les anhydrites et les hémihydrates.

14. Liant selon l'une quelconque des revendications 11 à 13, **caractérisé en ce qu'**il comprend au moins un retardateur de prise choisi parmi les gluconates, les saccharides, les retardateurs de type acide phosphorique ou acide carboxylique ou leurs mélanges.

15. Liant selon l'une quelconque des revendications 11 à 14, **caractérisé en ce qu'**il comprend au moins un agent dispersant choisi parmi les polynaphtalènes sulfonates, les polymélamines sulfonates, les acides hydroxycarboxyliques, les acides (poly)acryliques, leurs dérivés et leurs sels correspondants, les dérivés de l'acide phosphonique, ainsi que leurs mélanges.

16. Liant selon l'une quelconque des revendications 11 à 15, **caractérisé en ce qu'**il est utilisé pour la fabrication d'un coulis, mortier ou béton.

## Claims

1. A sulfonaluminate clinker **characterized in that** it comprises as a phasic composition, as related to the total weight of the clinker:
- 5 to 25%, preferably 10 to 20%, of the calcium aluminoferrite phases of a composition corresponding to the general formula C2AXF(1-X), with X comprised from 0.2 to 0.8.
- 15 to 35%, preferably 20 to 30%, of the calcium sulfoaluminate phase « yee'limit » (C4A3$),
- 40 to 75%, preferably 45 to 65% belite (C2S),
- from 0,01 to 10% of one or several minor phases selected among calcium sulfates, alkali sulfates perovskite, calcium aluminates, gehlenite, free lime and periclase, and/or a vitreous phase,
- and wherein it comprises one or several secondary elements selected among sulfur, magnesium, sodium, potassium, boron, phosphorus, zinc, manganese, titanium, fluorine, chlorine, present in the following quantities:
- from 3 to 10% of sulfur expressed as sulfuric anhydride
- up to 5% of magnesium expressed as magnesium oxide,
- up to 5% of sodium expressed as sodium oxide,
- up to 5% of potassium expressed as potassium oxide,
- up to 3 % of boron expressed as boron oxide,
- up to 7% of phosphorus expressed as phosphoric anhydride,
- up to 5% of zinc, manganese, titanium or mixtures thereof, expressed as oxides of these elements,
- up to 3% of fluoride, of chloride, or mixtures thereof, expressed as calcium fluoride and calcium chloride, the quantity of secondary elements, expressed as indicated above, being lower or equal to 15% in weight as related to the total weight of the clinker.

2. The sulfonaluminate clinker according to claim 1, **characterized in that** it comprises one or several secondary elements in the following quantities, in weight as related to the total weight of the clinker:
- from 4 to 8% of sulfur expressed as sulfuric anhydride,
- from 1 to 4% of magnesium expressed as magnesium oxide,
- from 0.1 to 2% of sodium expressed as sodium oxide,
- from 0.1 to 2% of potassium expressed as potassium oxide,
- up to 2% of boron, expressed as boron oxide,
- up to 4% of phosphorus, expressed as phosphorus anhydride,
- up to 3% of zinc, manganese, titanium or mixtures thereof, expressed as oxides of these elements,
- up to 1% of fluoride, of chloride, of mixtures thereof, expressed as calcium fluoride and calcium chloride.

3. The sulfonaluminate clinker according to claims 1 to 2 **characterized in that** it comprises the following secondary elements, in the following quantities, in weight as related to the total weight of the clinker:
- from 0.2 to 1% of sodium expressed as sodium oxide,
- from 0.2 to 1% of potassium, expressed as potassium oxide,
- from 0.2 to 2% of boron, expressed as boron oxide,
- a level of fluoride plus chloride lower or equal to 1%, expressed as calcium fluoride and calcium chloride.

4. The sulfonaluminate clinker according to any one of claims 1 to 3, **characterized in that** it comprises at least the following principal oxides present in relative proportions expressed in % of the total weight of the clinker:
CaO: 50 to 61 %
Al₂O₃: 9 to 22%
SiO₂: 15 to 25%
Fe₂O₃: 3 to 11 %.

5. The sulfonaluminate clinker according to any one of claims 1 to 4, **characterized in that** the belite phase is partially or totally crystallized in the form of α'.

6. The sulfonaluminate clinker according to any one of claims 1 to 5, **characterized in that** the belite phase in the form of α' represents at least 50% of the weight of the clinker.

7. The sulfonaluminate clinker according to any one of the previous claims, **characterized in that** it comprises a setting and/or hardening accelerator or retarder.

8. A production process of clinker according to any one of the previous claims, **characterized in that** it comprises:
a) the preparation of a raw mix comprising at least one raw material or a mixture of raw materials capable, by clinkerization, of providing the phases phases C2AXF(1-X) with x comprised from 0.2 to 0.8, C4A3$ and C2S in the required proportions;
b) the addition and the mixing with the raw mix of a secondary-element-supplying additive selected among sulfur, magnesium, sodium, potassium, boron, phosphorus, zinc, manganese, titanium, fluorine, chlorine, or mixtures thereof in a quantity calculated to provide a clinker according to any one of claims 1 to 4;
c) the calcination of the mixture at a temperature from 1150°C to 1350°C, preferably from 1220°C to 1320°C, during a minimum of 15 minutes in a sufficiently oxidized atmosphere to avoid reducing the calcium sulfate in sulfur dioxide.

9. The production process of a sulfonaluminate clinker according to claim 8, **characterized in that** the raw materials used for its production are selected among phosphatic limestone, magnesian limestone, clays, fly ashes, furnace bottom ashes, ashes from fluidized beds, laterites, bauxites, red muds, slags, waste incineration ashes, gypsums, flue gas desulfurization gypsums, phosphogypsums, desulfurization muds, industrial scoriae as well as mixtures thereof.

10. The production process of a clinker according to claim 8 or 9, **characterized in that** the obtained clinker is then ground with or without calcium sulfate, in the form of gypsum, or hemihydrate, or anhydrite, until obtaining a Specific Blaine Surface higher than 3000 cm²/g, advantageously higher than 3500 cm²/g_{.}

11. A hydraulic binder comprising a mixture of clinker according to any one of claims 1 to 7 and source materials of calcium sulfate and/or calcium oxide.

12. The hydraulic binder according to claim 11, **characterized in that** it comprises up to 30% of the weight of the total weight of the binder, of at least one material selected among limestone, pozzolans, fly ashes and blast furnace slags.

13. The hydraulic binder according to claims 11 or 12, **characterized in that** it comprises up to 15% of the weight of the total weight of the binder, of a material selected among gypsum, anhydrites and hemihydrates.

14. The hydraulic binder according to any one of claims 11 to 13, **characterized in that** it comprises at least one setting retarder selected among gluconates, saccharides, retarders of the phosphoric acid or carboxylic acid types or mixtures thereof.

15. The hydraulic binder according to any one of claims 11 to 14, **characterized in that** it comprises at least one dispersing agent selected among polynaphtalene sulfonates, polymelamine sulfonates, hydroxycarboxylic acids, (poly)acrylic acids, their derivatives and corresponding salts, the derivatives of phosphoric acid, as well as mixtures thereof.

16. The hydraulic binder according to any one of claims 11 to 15, **characterized in that** it is used to produce slurry, mortar or concrete.

## Patentansprüche

1. Sulfoaluminatklinker, **dadurch gekennzeichnet, dass** er als Phasenzusammensetzung, bezogen auf das Gesamtgewicht des Klinkers, umfasst:
- 5 bis 25 %, vorzugsweise 10 bis 20 % Calciumaluminoferritphase mit einer Zusammensetzung, die der allgemeinen Formel C2AXF(1-X) entspricht, wobei X zwischen 0,2 und 0,8 liegt,
- 15 bis 35 %, vorzugsweise 20 bis 30 % Calciumsulfoaluminatphase "yee' limite" (C4A3$),
- 40 bis 75 %, vorzugsweise 45 bis 65 % Belit (C2S),
- 0,01 bis 10 % einer oder mehrerer Nebenphasen, ausgewählt aus Calciumsulfaten, Alkalisulfaten, Perowskit, Calciumaluminaten, Gehlenit, freiem Kalk und Periklase und/oder einer Glasphase,
- und dass er ein oder mehrere sekundäre Elemente enthält, ausgewählt aus Schwefel, Magnesium, Natrium, Kalium, Bor, Phosphor, Zink, Mangan, Titan, Fluor, Chlor, die in den folgenden Mengen vorliegen:
- 3 bis 10 % Schwefel, ausgedrückt in Schwefelsäureanhydrid,
- bis 5 % Magnesium, ausgedrückt in Magnesiumoxid,
- bis 5 % Natrium, ausgedrückt in Natriumoxid,
- bis 5 % Kalium, ausgedrückt in Kaliumoxid,
- bis 3 % Bor, ausgedrückt in Boroxid,
- bis 7 % Phosphor, ausgedrückt in Phosphorsäureanhydrid,
- bis 5 % Zink, Mangan, Titan oder ihre Mischung, ausgedrückt in Oxiden dieser Elemente,
- bis 3 % Fluorid, Chlorid oder ihre Mischung, ausgedrückt in Calciumfluorid und Calciumchlorid, wobei der Anteil an sekundären Elementen, wie vorstehend angegeben ausgedrückt, kleiner als oder gleich 15 Gew.-%, bezogen auf das Gesamtgewicht des Klinkers, ist.

2. Sulfoaluminatklinker nach Anspruch 1, **dadurch gekennzeichnet, dass** er ein oder mehrere sekundäre Elemente in den folgenden Mengen, ausgedrückt in Gewicht bezüglich des Gesamtgewichts des Klinkers, umfasst:
- 4 bis 8 % Schwefel, ausgedrückt in Schwefelsäureanhydrid,
- 1 bis 4 % Magnesium, ausgedrückt in Magnesiumoxid,
- 0,1 bis 2 % Natrium, ausgedrückt in Natriumoxid,
- 0,1 bis 2 % Kalium, ausgedrückt in Kaliumoxid,
- bis 2 % Bor, ausgedrückt in Boroxid,
- bis 4 % Phosphor, ausgedrückt in Phosphorsäureanhydrid,
- bis 3 % Zink, Mangan, Titan oder ihre Mischung, ausgedrückt in Oxiden dieser Elemente,
- bis 1 % Fluorid, Chlorid oder ihre Mischung, ausgedrückt in Calciumfluorid und Calciumchlorid.

3. Sulfoaluminatklinker nach den Ansprüchen 1 bis 2, **dadurch gekennzeichnet, dass** er die folgenden sekundären Elemente in den folgenden Mengen, ausgedrückt in Gewicht bezüglich des Gesamtgewichts des Klinkers, umfasst:
- 0,2 bis 1 % Natrium, ausgedrückt in Natriumoxid,
- 0,2 bis 1 % Kalium, ausgedrückt in Kaliumoxid,
- 0,2 bis 2 % Bor, ausgedrückt in Boroxid,
- einen Gehalt an Fluorid plus Chlorid kleiner als oder gleich 1 %, ausgedrückt in Calciumfluorid und -chlorid.

4. Sulfoaluminatklinker nach einem der Ansprüche 1 bis 3, **dadurch gekennzeichnet, dass** er mindestens die folgenden Hauptoxide umfasst, die in den relativen Anteilen, ausgedrückt in % vom Gesamtgewicht des Klinkers, vorliegen:
| | |
|---|---|
| CaO: | 50 bis 61 % |
| Al₂O₃: | 9 bis 22 % |
| SiO₂: | 15 bis 25 % |
| Fe₂O₃ : | 3 bis 11 %. |

5. Sulfoaluminatklinker nach einem der Ansprüche 1 bis 4, **dadurch gekennzeichnet, dass** die Belitphase teilweise oder vollständig in der α'-Form kristallisiert ist.

6. Sulfoaluminatklinker nach einem der Ansprüche 1 bis 5, **dadurch gekennzeichnet, dass** die Belitphase in α'-Form mindestens 50 Gew.-% des Klinkers darstellt.

7. Sulfoaluminatklinker nach einem der vorhergehenden Ansprüche, **dadurch gekennzeichnet, dass** er einen Abbinde- und/oder Erhärtungs-Beschleuniger oder -Verzögerer umfasst.

8. Verfahren zur Herstellung eines Klinkers nach einem der vorhergehenden Ansprüche, **dadurch gekennzeichnet, dass** es umfasst:
a) die Herstellung eines Rohmaterials, das mindestens einen Ausgangsstoff oder eine Mischung von Ausgangsstoffen umfasst, der bzw. die durch Klinkerbildung die Phasen C2AXF(1-X), worin x zwischen 0,2 und 0,8 liegt, C4A3$ und C2S in den erforderlichen Verhältnissen liefern kann;
b) das Versetzen und Vermischen dieses Rohmaterials mit mindestens einem Zusatz eines sekundären Elements, ausgewählt aus Schwefel, Magnesium, Natrium, Kalium, Bor, Phosphor, Zink, Mangan, Titan, Fluor, Chlor oder ihren Mischungen in einer Menge, die so berechnet ist, dass sie einen Klinker nach einem der Ansprüche 1 bis 4 ergibt;
c) das Brennen der Mischung bei einer Temperatur von 1150°C bis 1350°C, vorzugsweise 1220°C bis 1320°C, während mindestens 15 Minuten in einer ausreichend oxidierenden Atmosphäre, dass die Reduktion des Calciumsulfats zu Schwefeldioxid vermieden wird.

9. Verfahren zur Herstellung eines Sulfoaluminatklinkers nach Anspruch 8, **dadurch gekennzeichnet, dass** die für seine Herstellung verwendeten Ausgangsstoffe ausgewählt sind aus Phosphatkalken, Magnesiumkalken, Tonen, Flugaschen, Hochofenaschen, Wirbelbettaschen, Lateriten, Bauxiten, Rotschlämmen, Schlacken, Trennstoffschlacken, Gipsen, Entschwefelungsgipsen, Phosphorgipsen, Entschwefelungsschlämmen, Industrieschlacken sowie ihren Mischungen.

10. Verfahren zur Herstellung eines Klinkers nach Anspruch 8 oder 9, **dadurch gekennzeichnet, dass** der erhaltene Klinker dann mit oder ohne Calciumsulfat in Form von Gips oder Halbhydrat oder Anhydrit gemahlen wird, bis man eine spezifische Blaine-Oberfläche von mehr als 3000 cm²/g, vorteilhafterweise von mehr als 3500 cm²/g, erhält.

11. Hydraulisches Bindemittel, umfassend eine Mischung des Klinkers nach einem der Ansprüche 1 bis 7 und Ausgangsmaterialien für Calciumsulfat und/oder Calciumoxid.

12. Bindemittel nach Anspruch 11, **dadurch gekennzeichnet, dass** es bis 30 Gew.-% vom Gesamtgewicht des Bindemittels mindestens eines Materials umfasst, das ausgewählt ist aus Kalkstein, Puzzolanen, Flugaschen und Hochofenschlacken.

13. Bindemittel nach den Ansprüchen 11 oder 12, **dadurch gekennzeichnet, dass** es bis 15 Gew.-% vom Gesamtgewicht des Bindemittels eines Materials umfasst, das ausgewählt ist aus Gips, Anhydriten und Halbhydraten.

14. Bindemittel nach einem der Ansprüche 11 bis 13, **dadurch gekennzeichnet, dass** es mindestens einen Abbindeverzögerer umfasst, der ausgewählt ist aus Gluconaten, Sacchariden, Verzögerern vom Typ Phosphorsäure oder Carbonsäure oder ihren Mischungen.

15. Bindemittel nach einem der Ansprüche 11 bis 14, **dadurch gekennzeichnet, dass** es mindestens ein Dispersionsmittel umfasst, das ausgewählt ist aus Polynaphtalensulfonaten, Polymelaminsulfonaten, Hydroxycarbonsäuren, (Poly)acrylsäuren, ihren Derivaten und ihren entsprechenden Salzen, den Derivaten der Phosphonsäure sowie ihren Mischungen.

16. Bindemittel nach einem der Ansprüche 11 bis 15, **dadurch gekennzeichnet, dass** es für die Herstellung eines Einpressmörtels, Mörtels oder Betons verwendet wird.
